# EUROPÄISCHE PATENTSCHRIFT

(11) **EP 1 451 492 B1**
(45) Veröffentlichungstag und Bekanntmachung des Hinweises auf die Patenterteilung: **11.10.2006**
(21) Anmeldenummer: 02803353.8
(22) Anmeldetag: 26.10.2002
(51) Int. Cl.: F16H 61/02

(54) **VERFAHREN BZW. VORRICHTUNG ZUR STEUERUNG DER SCHALTUNGEN EINES AUTOMATISCHEN GETRIEBES EINES KRAFTFAHRZEUGES**
METHOD AND DEVICE FOR CONTROLLING THE GEAR SHIFTS OF AN AUTOMATIC GEARBOX OF A MOTOR VEHICLE
PROCEDE ET DISPOSITIF DE COMMANDE DES CHANGEMENTS DE VITESSE D'UNE TRANSMISSION AUTOMATIQUE D'UN VEHICULE AUTOMOBILE

(30) Priorität: 23.11.2001 DE 10157393
(43) Veröffentlichungstag der Anmeldung: 01.09.2004
(73) Patentinhaber: Volkswagen AG, 38436 Wolfsburg (DE); Conti Temic microelectronic GmbH, 90411 Nürnberg (DE)
(72) Erfinder: BOTHE, Edgar, 31224 Peine (DE); MÜLLER, Henning, 38518 Gifhorn (DE); LEIPNITZ, Klaus, 90542 Eckental (DE)
(86) Internationale Anmeldenummer: PCT/EP2002/011994
(87) Internationale Veröffentlichungsnummer: WO 2003/044395

(56) Entgegenhaltungen:
- EP-A- 1 081 414
- DE-A- 4 233 938
- DE-A- 4 305 903
- DE-A- 10 040 423
- DE-C- 4 332 265

## Beschreibung

Die Erfindung betrifft zunächst ein Verfahren zur Steuerung der Schaltungen eines Automatikgetriebes oder eines automatisierten Getriebes eines Kraftfahrzeuges, wobei die Schaltungen des Getriebes mit Hilfe eines Steuergerätes in zwei unterschiedlichen Betriebsarten realisiert werden, nämlich das Getriebe in einer ersten Betriebsart im Automatik-Modus betrieben wird und die Schaltungen im wesentlichen von ermittelten Fahrgrößen und mit Hilfe des Steuergerätes automatisch realisiert werden, wobei aber im Automatik-Modus das jeweilige Automatik-Fahrprogramm und/oder der jeweils höchste einzustellende Gang bestimmbar bzw. auswählbar ist, und wobei das Getriebe in einer zweiten Betriebsart im automatisierten Hand-Schalt-Modus betrieben wird und die Schaltungen mit Hilfe des Steuergerätes und einer vom Fahrer manuell betreibbaren Betätigungsvorrichtung realisiert werden.

Weiterhin betrifft die Erfindung eine Vorrichtung zur Steuerung der Schaltungen eines Automatikgetriebes oder eines automatisierten. Getriebes eines Kraftfahrzeuges, arbeitend nach dem eingangs genannten Verfahren.

Im Stand der Technik, von dem die Erfindung u.a. ausgeht (EP 1 039 178 A2), ist bspw. eine Vorrichtung bzw. ein Verfahren zur Steuerung der Schaltungen eines automatisierten Getriebes bekannt, bei dem eine Betätigungsvorrichtung im Bereich des Lenkrades angeordnet ist, insbesondere hier ein wippenartiger Schalter vorgesehen ist, um im Hand-Schalt-Modus die entsprechenden Hoch- bzw. Rückschaltungen vom Fahrer manuell zu realisieren. (Die hier im Bereich des Lenkrades angeordnete Betätigungsvorrichtung wird auch häufig als "Tiptronic-Schaltung/Vorrichtung" bezeichnet). Durch die Betätigung der Schaltelemente am Lenkrad, kann der Automatik-Modus, wenn das Getriebe entsprechend im Automatik-Modus gerade betrieben wird, kurzzeitig außer Betrieb gesetzt werden, insbesondere um den Hand-Schalt-Modus entsprechend mit Hilfe der Schalter der Betätigungsvorrichtung zu aktivieren, damit der Fahrer die Schaltungen, also die einzelnen Gangwechsel im Getriebe manuell mit Hilfe der im Bereich des Lenkrades angeordneten Schalter realisieren kann. Die Rückkehr in den Automatik-Modus erfolgt insbesondere nach einer bestimmten voreingestellten Zeit oder auch durch Auslösen eines "Kickdowns" am Gaspedal. Bei dem hier beschriebenen Verfahren bzw. dieser bekannten Vorrichtung wird also mit Hilfe der entsprechenden Betätigungsvorrichtung ein Wechsel zwischen dem Automatik-Modus und dem Hand-Schalt-Modus realisiert. Eine ähnliche Vorrichtung bzw. ein ähnliches Verfahren wird auch in der DE 43 11 886 A1 beschrieben.

Bei den bisher im Stand der Technik bekannten automatisierten Schaltgetrieben ist einerseits der Automatik-Modus, andererseits der Hand-Schalt-Modus entsprechend betreibbar. Welcher Modus nun betrieben werden soll, kann vom Fahrer ausgewählt werden. Zur Realisierung des Hand-Schalt-Modus ist bspw. ein Schalt-Wählhebel vorgesehen, der in einer ersten Schaltgasse und auch zusätzlich noch in einer zweiten Schaltgasse, nämlich zur Realisierung des entsprechenden Hand-Schalt-Modus bewegbar ist In der ersten Schaltgasse ist der Schalt-Wahlhebel in verschiedene Positionen, vzw. in die Positionen P, R, N und D bewegbar, wobei der Schalt-Wählhebel in die zweite Schaltgasse, insbesondere über eine hierfür vorgesehene Quergasse bewegbar ist und dann hier in der zweiten Schaltgasse in die Positionen "+" und "-" bewegbar ist, um die entsprechenden Hoch- und Rückschaltungen im Hand-Schalt-Modus zu realisieren. Weiterhin sind im Stand der Technik auch Betätigungsvorrichtungen zur Realisierung des Hand-Schalt-Modus bekannt, die im Bereich des Lenkrades vorgesehen sind, insbesondere entweder zwei separate Schalter zum Hoch- bzw. Rückschalten der Getriebegänge aufweisen oder auch einen einzigen Schalter aufweisen, der vzw. als Wippenschalter ausgeführt ist, mit dessen Hilfe aber die entsprechenden jeweiligen Hoch- und Rückschaltvorgänge realisiert werden können.

Allen diesen Vorrichtungen und Verfahren ist bisher gemeinsam, daß der Fahrer sich entscheiden muß, ob er nun im Automatik-Modus fahren möchte, also ob im wesentlichen der Gangswechsel innerhalb des Getriebes automatisch mit Hilfe des Steuergerätes realisiert wird, basierend auf den entsprechenden Fahrgrößen wie Fahrpedalstellung etc., oder ob er das Fahrzeug im Hand-Schalt-Modus betreiben möchte, wozu er diesen Modus auch entsprechend aktivieren muß. Zumeist kann er diesen Hand-Schalt-Modus entweder aktivieren durch den Schalt-Wählhebel, den der Fahrer in die entsprechende Position M, also in die zweite Schaltgasse bewegen muß, woraufhin dann die entsprechenden Hoch- und Rückschaltungen durchgeführt werden können. Es ist aber auch möglich, daß durch die Aktivierung der entsprechenden im Lenkradbereich vorgesehenen Schalter dann vom reinen Automatik-Modus auf den Hand-Schalt-Modus entsprechend umgeschaltet werden kann.

Die im Stand der Technik bekannten Verfahren bzw. Vorrichtungen zur Steuerung der Schaltungen eines automatisierten Getriebes sind aber noch nicht optimal. Zwar kann das Fahrzeug bzw. das Getriebe in der ersten Betriebsart, nämlich im Automatik-Modus betrieben werden, allerdings gibt es hier unterschiedliche Automatik-Modi, nämlich unterschiedliche jeweilige Automatik-Fahrprogramme, wie bspw. ein Komfort-Fahrprogramm, ein Sport-Fahrprogramm und/oder ein Ökonomie-Fahrprogramm (Economy). Anders ausgedrückt, der Fahrer kann insbesondere durch die entsprechende Einstellung des Schalt-Wählhebels ein bestimmtes Fahrprogramm auswählen, und das Fahrzeug bzw. das Getriebe wird dennoch im Automatik-Modus entsprechend diesem ausgewählten Fahrprogramm betrieben. Gleichzeitig ist es für den Fahrer möglich, durch die entsprechende Einstellung des Schalt-Wählhebels einen höchsten im Getriebe einlegbaren Gang entsprechend zu bestimmen bzw. zu begrenzen. Dies ist insbesondere bei Bergabfahrten von Bedeutung. Ist das Getriebe bspw. als 5- oder 6-Ganggetriebe ausgeführt und möchte der Fahrer des Kraftfahrzeugs eine Bergabfahrt durchführen, so ist es ihm freigestellt, den höchsten einzustellenden Gang des Getriebes entsprechend zu begrenzen, bspw auf den dritten Gang, damit er die Motorbremse entsprechend zum Abbremsen des Fahrzeuges zu Hilfe nehmen kann. Auch so ist eine Begrenzung auf den vierten Gang wie auch auf den zweiten oder ersten Gang durchaus möglich bzw. denkbar. Dies liegt im Ermessen des Fahrers. Nachteilig bei den bisherigen im Stand der Technik bekannten Verfahren bzw. Vorrichtungen ist nun, wenn das Getriebe bzw. das Fahrzeug nun gerade im Automatik-Modus betrieben wird, der Fahrer die Hände vom Lenkrad nehmen muß, um mit Hilfe des Schalt-Wählhebels dann das spezielle Fahrprogramm, was er gerade wünscht, einzustellen, bzw. - bei einer Bergabfahrt - den entsprechenden im Getriebe höchsten einstellbaren Gang auszuwählen, anders ausgedrückt, den Schalt-Wahlhebel in die entsprechende Position zu verschieben, um das spezifische Fahrprogramm bzw. den entsprechend höchs-ten einzustellenden Gang im Automatik-Modus zu definieren. Dies ist für den Fahrer nicht nur arbeitsaufwendig, sondern auch unkomfortabel.

So sind bspw. aus der DE - C - 34 32 265, aus der DE - A - 42 33 938, aus der DE - A - 43 05 903, aus der DE - A - 100 40 423 und aus der EP - A - 1 081 414 entsprechende Verfah-ren bzw. Vorrichtungen bekannt. Hierbei wird das entsprechende Verfahren aber entweder über nur ein Bedienelement, nämlich nur einen Schalt - Wählhebel realisiert oder diese Druckschriften beschäftigen lediglich mit dem Wechsel zwischen Automatik-Fahrprogrammen (D, S, E).

Der Erfindung liegt daher die Aufgabe zugrunde, das eingangs genannte Verfahren bzw. die eingangs genannte Vorrichtung zur Steuerung der Schaltungen eines Automatikgetriebes oder eines automatisierten Getriebes derart auszugestalten und weiterzubilden, dass die Steuerung der Schaltungen, insbesondere die spezifischen Einstellungen innerhalb eines Automatik-Modus vereinfacht sind.

Für das Verfahren ist die zuvor aufgezeigte Aufgabe nun durch die Kombination der Merk-male des Patentanspruches 1 gelöst.

Die eingangs genannte Vorrichtung arbeitet nach diesem erfindungsgemäßen Verfahren.

Durch das Verfahren bzw. durch die Vorrichtung ist der Schaltkomfort für den Fahrer nun-mehr wesentlich erhöht. Nunmehr kann mit der Betätigungsvorrichtung, mit der auch sonst die Hoch- und Rückschaltungen im Hand-Schalt-Modus betrieben werden, nunmehr -gleichzeitig -, wenn der Automatik-Modus im Getriebe anliegt bzw. realisiert ist, insbesondere bei einer Bergabfahrt der jeweilige höchste Gang, entsprechend dem Wunsch des Fahrers, eingestellt werden. Ist nun vzw. diese Betätigungsvorrichtung im Bereich des Lenkrades an-geordnet so braucht der Fahrer nicht mal mehr die Hände vom Lenkrad zu nehmen, um nun bei beibehaltendem Automatik-Modus des Getriebes das jeweilige spezifische Fahrpro-gramm zu wechseln, bspw. vom Komfort-Fahrprogramm in das Sport-Fahrprogramm bzw. das Ökonomie-Fahrprogramm zu wechseln. Gleiches gilt für die Einstellung bzw. Begren-zung des jeweiligen höchsten einzustellenden Ganges. Im Ergebnis sind dadurch die eingangs beschriebenen Nachteile vermieden und eine komfortable Schaltungsmöglichkeit für den Fahrer realisiert.

Es gibt nun eine Vielzahl von Möglichkeiten, das erfindungsgemäße Verfahren bzw. die erfindungsgemäße Vorrichtung in vorteilhafter Weise auszugestalten und weiterzubilden. Hierzu darf zunächst auf die den Patentanspruch 1 bzw. den Patentanspruch 6 nachgeordneten Patentansprüche verwiesen werden. Im einzelnen soll nun ein bevorzugtes Ausführungsbeispiel für das Verfahren bzw. für die Vorrichtung in der folgenden Zeichnung und der dazugehörenden Beschreibung näher erläutert werden. In der Zeichnung zeigt:

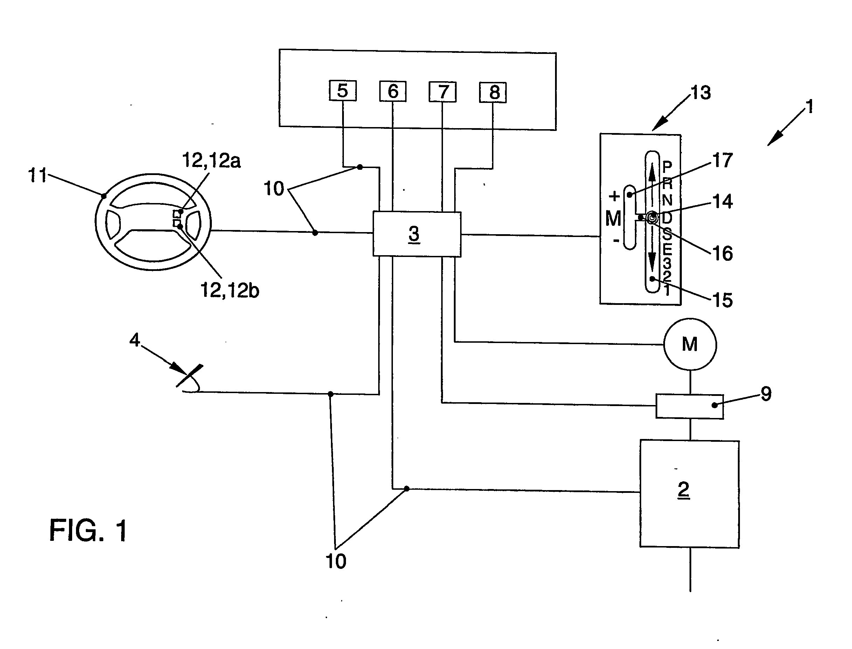

- Fig.1: in einer schematischen Darstellung ein mögliches Schaltungsschema zur Realisierung des erfindungsgemäßen Verfahren bzw. die wesentlichen Bestandteile der erfindungsgemäßen Vorrichtung.

Die einzige Figur der Zeichnung, nämlich die Fig. 1 soll das erfindungsgemäße Verfahren entsprechend verdeutlichen, wobei hier die wesentlichen Bestandteile der Vorrichtung 1 zur Durchführung dieses Verfahrens dargestellt sind. Das Kraftfahrzeug selbst ist hier nicht bzw. nur teilweise dargestellt dargestellt ist das automatisierte Getriebe bzw. Automatikgetriebe 2, wobei die Schaltungen des Getriebes 2 mit-Hilfe eines Steuergerätes 3 und innerhalb des Getriebes 2 angeordneter, hier nicht näher dargestellter Aktuatoren realisiert werden. Das Getriebe 2 ist nun in einer ersten Betriebsart, nämlich im Automatik-Modus betreibbar, d.h. im wesentlichen übemimmt hier das Steuergerät 3, das vzw. auf elektronischer/elektrischer Basis ausgeführt ist, die entsprechenden Steuervorgänge zur Schaltung der entsprechenden Gangwechsel des Getriebes 2 aufgrund ermittelter bzw. eingegebener Fahrgrößen, nämlich der Stellung des Fahrpedals 4 sowie anderer über die hier schematisch dargestellten Sensoren 5 bis 8 ermittelter Fahrgrößen wie bspw. Fahrgeschwindigkeit, Drehzahlen der Eingangs- und Ausgangswelle des Getriebes 2, Motordrehzahl etc.. Weiterhin steuert das Steuergerät 3 die Schaltungen, also die Öffnungs- und Schließvorgänge der Kupplung 9. Hierzu sind ebenfalls im Bereich der Kupplung 9 nicht näher dargestellte entsprechende Aktuatoren vorgesehen. Die Aktuatoren des Getriebes 2 und der Kupplung 9 sind vzw. auf elektrischer Basis realisiert, können aber auch auf hydraulischer Basis realisiert werden , was im einzelnen so bereits bekannt ist.

Die wesentlichen Bestandteile der Vorrichtung 1 sind über entsprechende hier schematisch angedeutete Steuerleitungen 10 miteinander verbunden. Insbesondere ist das Steuergerät 3 zusätzlich noch mit der im Bereich des Lenkrades 11 vorgesehenen Betätigungsvorrichtung 12 verbunden und mit einer Schalt-Wählhebel-Einrichtung 13, die vzw. auf der Mittelkonsole des Kraftfahrzeuges angeordnet ist, entsprechend verbunden.

Die Schalt-Wählhebel-Einrichtung 13 weist einen Schalt-Wählhebel 14 auf, der innerhalb einer ersten Schaltgasse 15 in bestimmte Positionen bewegbar ist, hier zumindest in die Positionen P (Parkposition), R (Rückwärts), N (Neutral), D (Vorwärts, Komfort Fahrprogramm), S (Sport-Fahrprogramm), E (Ökonomie-Fahrprogramm) sowie in die Positionen "3", "2", und "1". Weiterhin ist der Schalt-Wählhebel 14 über eine Quergasse 16 in eine zweite Schaltgasse 17, nämlich hier zunächst einmal in die Position M bewegbar, um dann die manuellen Hochschaltungen in der Position "+" und die Rückschaltungen in der Position "-" mit Hilfe des Steuergerätes 3 innerhalb des Getriebes 2 realisieren zu können.

Wie der schematische Schaltaufbau der Fig. 1 zeigen soll, ist das hier dargestellte Automatikgetriebe bzw. automatisierte Getriebe 2 nunmehr zunächst in einer ersten Betriebsart, nämlich im Automatik-Modus betreibbar. Unter der Bezeichnung Automatik-Modus" werden nun insbesondere die Stellungen des Schalt-Wählhebels 14 in den Positionen "D", "S", "E" und "3", "2" und "1" bezeichnet. Dies bedeutet, daß im Automatik-Modus unterschiedliche Fahrprogramme vom Fahrer auswählbar sind, die insbesondere im Steuergerät 3 entsprechend abgespeichert sind, bzw. bei einer entsprechenden Verschiebung des Schalt-Wählhebels 14 bspw. in die Position 3 innerhalb der ersten Schaltgasse 15 der jeweilige höchste einstellbare Gang des Getriebes, hier bspw. auf den dritten Gang begrenzt ist (oder auch auf den zweiten bzw. ersten Gang begrenzt werden kann, wenn nämlich der Schalt-Wählhebel 14 in die Position 2 und 1 bewegt wird). Die unterschiedlichen Fahrprogramme können in üblicher Weise als Schaltkennfelder im Steuergerät 3 abgespeichert sein. Ebenso sind für den Automatik-Modus die entsprechenden Hochschat- und Rückschaltkennlinien abgespeichert.

Weiterhin ist aber nunmehr erkennbar, daß das hier dargestellte Getriebe 2 auch in einer anderen Betriebsart, nämlich in einer von der ersten Betriebsart unterschiedlichen zweiten Betriebsart, nämlich im automatisierten Hand-Schalt-Modus betrieben werden kann. Dies bedeutet, daß bspw. bei einer Bewegung des Schalt-Wählhebels 14 über die Quergasse 16 in die zweite Schaltgasse 17, also in die Stellungen für manuelle Schaltungen M und bei einer entsprechenden Bewegung des Schaft-Wählhebels 14 in die Position "+" bzw. "-" die entsprechenden Gänge innerhalb des Getriebes manuell hoch- oder runtergeschaltet werden können. Dies ist auch möglich mit der im Bereich des Lenkrades 11 angeordneten Betätigungsvorrichtung 12. Hierzu weist die Betätigungsvorrichtung 12 vzw. entsprechende Schalter 12a und 12b auf, damit im Hand-Schalt-Modus mit Hilfe der Schalter 12a und 12b entsprechende Hoch- bzw. Rückschaltungen innerhalb des Getriebes 2 erfolgen können. Der Hand-Schalt-Modus ist entweder dadurch aktivierbar, daß der Schaft-Wählhebel 14 in die Position M verschoben wird oder wäre auch bspw. dadurch aktivierbar, daß einer der Schalter 12a bzw. 12b über einen längeren Zeitraum gedrückt gehalten bzw. betätigt wird. Es ist auch denkbar, daß ein weiterer zusätzlicher Schalter zur Realisierung der Umschaltung vom Automatik-Modus zum Hand-Schalt-Modus (und umgekehrt) im Bereich des Lenkrades 11 angeordnet ist.

Die Betätigungsvorrichtung 12 und/oder die Steuerung ist steuerungstechnisch so ausgebildet und/oder ausgeführt, daß mit Hilfe der Betätigungsvorrichtung 12 - während das Getriebe 2 im Automatik-Modus betrieben wird - der jeweilige höchste einstellbare Gang auswählbar ist. Die Vorrichtung 1 ist daher so ausgebildet, daß die Betätigungsvorrichtung 12 und/oder die Steuerung steuerungstechnisch so ausgebildet und /oder ausgeführt ist, daß mit Hilfe der Betätigungsvorrichtung 12 - während das Getriebe zwar im Automatik-Modus betreibbar ist bzw. betrieben wird - der jeweilige höchste einstellbare Gang auswählbar ist.

Durch die so realisierte Steuerung bzw. so realisierte Vorrichtung 1 werden entscheidende Vorteile erzielt, insbesondere kann mit der gleichen Betätigungsvorrichtung 12, mit deren Hilfe der Hand-Schalt-Modus betrieben wird, nun auch die spezifischen Fahrprogramme und/oder ein jeweiliger höchster einstellbarer Gang innerhalb des Getriebes 2, insbesondere bei einer Bergabfahrt, eingestellt oder ausgewählt werden, wenn der Automatik-Modus immer noch eingestellt ist. Insbesondere braucht der Fahrer nicht die Hände vom Lenkrad 11 wegzunehmen und kann mit der bereits hier vorgesehenen Betätigungsvorrichtung 12, bei eingelegtem Automatik-Modus die spezifischen Fahrprogramme des Automatik-Modus verändern und/oder einen entsprechenden einzustellenden höchsten Gang auswählen. So kann der Fahrer bspw. mit Hilfe der Betätigungsvorrichtung 12 unterschiedliche Automatik-Fahrprogramme auswählen, nämlich einerseits das Sport-Fahrprogramm S und ein Ökonomik-Fahrprogramm E sowie das "normale" Komfort-Fahrprogramm D. Hierzu kann die Schaltung so ausgelegt sein, daß bei eingelegtem Automatik-Modus durch Betätigung der Schalttasten 12a bzw. 12b diese spezifischen Automatik-Fahrprogramme entsprechend ausgewählt werden können und eben bei Betätigung der Schalter 12a und 12b nicht direkt auf den Hand-Schalt-Modus umgeschaltet wird. Bspw. kann ebenfalls die Schaltung bzw. Betätigungsvorrichtung 12 so ausgelegt sein, daß wenn das Getriebe 2 als 6-Gang- oder 5-Ganggetriebe ausgeführt ist bzw. auch nur als 4-Ganggetriebe ausgeführt ist, der jeweils im Automatik-Modus höchste einstellbare Gang auf einen der unteren Gänge begrenzt eingestellt wird. Dies bedeutet, daß bspw. bei einer Bergabfahrt maximal bspw. nur der dritte Gang innerhalb des Getriebes 2 eingelegt wird, so daß hier die Motorbremse entsprechend mitbenutzt werden kann. Einerseits könnte nach einer derartigen Einstellung mit Hilfe der Betätigungsvorrichtung 12 auch wieder auf einen der oberen Gänge zurückgestellt werden, also die entsprechende Begrenzung auf einen höchsten Gang aufgehoben werden, insbesondere wenn bspw. die Minimalhysterese der entsprechenden Schaltkennlinie dem nicht entgegensteht. Dies ist einerseits durch die hier dargestellte Betätigungsvorrichtung 12 möglich, kann aber auch auf automatische Weise mit Hilfe des Steuergerätes 3 verwirklicht werden, bspw. kann die Begrenzung auf einen der unteren Gänge als den höchsten einzustellenden Gang unter bestimmten Bedingungen aufgehoben werden, nämlich wenn die Betätigungsvorrichtung 12 über eine vorbestimmte Dauer (bspw. länger als 1. Sek.) betätigt wird, oder wenn das Fahrzeug eine bestimmte Minimalgeschwindigkeit erreicht oder wenn die Begrenzung auf einen unteren Gang über eine bestimmte Maximalzeit eingestellt war. Auch ein spezifisches Fahrverhalten des Fahrers bspw. bei einem "Kickdown" über das Gaspedal 4 kann eine derartige Begrenzung aufheben.

Insbesondere die Aufhebung der auf einen bestimmten unteren Gang - als höchsten Gang - realisierten Begrenzung kann mit Hilfe des Steuergerätes 3 realisiert werden. Das Steuergerät 3 weist hierzu die erforderlichen elektronischen Komponenten wie einen Timer etc. auf, um die entsprechenden oben genannten Bedingungen abzufragen und zu realisieren. Auch können weitere zusätzliche hier nicht dargestellte Komponenten vorgesehen sein, um das Verfahren bzw. die Vorrichtung noch weiter auszugestalten. Es ist bereits darauf hingewiesen worden, daß die Betätigungsvorrichtung 12 noch weitere zusätzliche Schalter aufweisen kann. An dieser Stelle sei angemerkt, daß die Schalter 12a und 12b der Betätigungsvorrichtung 12 auch bspw. durch einen Wippenschalter ersetzt werden können. Auch weitere Displays im Bereich des Lenkrades 11 können angeordnet werden, mit deren Hilfe der Fahrer ablesen kann, in welches spezifische Fahrprogramm innerhalb des Automatik-Modus er gerade geschaltet hat oder welchen Gang er als den höchsten Gang nunmehr genau ausgewählt hat. Eine visuelle Wahmehmung für den Fahrer erhöht den entsprechenden Schaltkomfort.

Im Ergebnis ist von wesentlicher Bedeutung, daß mit Hilfe der Betätigungsvorrichtung 12, mit der sonst bisher im Stand der Technik immer nur der Hand-Schalt-Modus betrieben wurde, nunmehr auch gleichzeitig, wenn nämlich der Automatik-Modus noch eingelegt ist, dieser Automatik-Modus entsprechend beeinflusst werden kann, also hier ein jeweils entsprechend höchster einzulegender Gang innerhalb des Getriebes 2 bestimmt werden kann, ohne daß der Fahrer den Schalt-Wählhebel 14 bewegen muß. Diese erfindungsgemäße schattungstechnische Verquickung der Betätigungsvorrichtung 12 erhöht in wesentlicher Weise den Fahrkomfort für den Fahrer.

### BEZUGSZEICHENLISTE

- 1: Vorrichtung
- 2: Getriebe
- 3: Steuergerät
- 4: Fahrpedal, Gaspedal
- 5: Sensoren
- 6: Sensoren
- 7: Sensoren
- 8: Sensoren
- 9: Kupplung
- 10: Steuerleitung
- 11: Lenkrad
- 12: Betätigungsvorrichtung
- 12a: Schalter
- 12b: Schalter
- 13: Schalt-Wählhebel-Einrichtung
- 14: Schalt-Wählhebel
- 15: 1. Schaltgasse
- 16: Quergasse
- 17: 2. Schaltgasse

## Patentansprüche

1. Verfahren zur Steuerung der Schaltungen eines Automatikgetriebes oder eines automatisierten Getriebes (2) eines Kraftfahrzeuges, wobei die Schaltungen des Getriebes (2) mit Hilfe eines Steuergerätes (3) in zwei unterschiedlichen Betriebsarten realisiert werden, nämlich das Getriebe (2) in einer ersten Betriebsart im Automatik-Modus betrieben wird und die Schaltungen im wesentlichen von ermittelten Fahrgrößen und mit Hilfe des Steuergerätes (3) automatisch realisiert werden, wobei aber im Automatik-Modus das jeweilige Automatik-Fahrprogramm und/oder der jeweils höchste einzustellende Gang (D, S, E, 3, 2, 1) über einen vorgesehenen Schalt-Wählhebel (14) bestimmbar bzw. auswählbar ist, und wobei das Getriebe (2) in einer zweiten Betriebsart im automatisierten Hand-Schaltmodus betrieben wird und die Schaltungen mit Hilfe des Steuergerätes (3) und einer vom Fahrer manuell betreibbaren Betätigungsvorrichtung (12) realisiert werden, **dadurch gekennzeichnet, dass** die Betätigungsvorrichtung (12) und/oder die Steuerung steuerungstechnisch so ausgebildet und/oder ausgeführt ist, dass mit Hilfe der Betätigungsvorrichtung (12) - während das Getriebe im Automatik-Modus betrieben wird - der jeweilige höchste einstellbare Gang auswählbar ist und dass die Begrenzung auf einen der unteren Gänge als höchsten einzustellenden Gang unter bestimmten Bedingungen aufgehoben wird, nämlich wenn die Betätigungsvorrichtung (12) über eine bestimmte Dauer betätigt wird.

2. Verfahren nach Anspruch 1, **dadurch gekennzeichnet, dass** im Automatik-Modus mehrere unterschiedliche Automatik-Fahrprogramme realisiert werden, nämlich zumindest ein Sport-Fahrprogramm (S) und ein Ökonomik-Fahrprogramm (E) realisierbar sind.

3. Verfahren nach einem der vorhergehenden Ansprüche, **dadurch gekennzeichnet, dass** das Getriebe als 6-Gang- oder 5-Gang-Getriebe ausgeführt ist und der jeweils im Automatik-Modus höchste einstellbare Gang auf einen der unteren Gänge begrenzt eingestellt wird.

4. Verfahren nach einem der vorhergehenden Ansprüche, **dadurch gekennzeichnet, dass** das Getriebe (2) als 6-Gang- oder 5-Gang-Getriebe ausgeführt ist und der jeweils im Automatik-Modus höchste einstellbare Gang, wenn dieser auf einen der unteren Gänge begrenzt eingestellt worden ist, dieser hiernach mit Hilfe der Bestätigungsvorrichtung (12) wieder auf einen der oberen Gänge zurückgestellt wird.

5. Verfahren nach einem der vorstehenden Ansprüche, **dadurch gekennzeichnet, dass** die Begrenzung auf einen der unteren Gänge als höchsten einzustellenden Gang unter bestimmten Bedingungen aufgehoben wird, nämlich wenn das Fahrzeug eine bestimmte Minimalgeschwindigkeit erreicht hat, oder wenn die Begrenzung auf einen unteren Gang über eine bestimmte Maximalzeit eingestellt war, oder ein bestimmtes spezifisches Fahrverhalten des Fahrers vorliegt.

6. Vorrichtung zur Steuerung der Schaltungen eines Automatikgetriebes oder eines automatisierten Getriebes (2) eines Kraftfahrzeuges, arbeitend nach dem Verfahren nach einem der Ansprüche 1 bis 5, wobei die Schaltungen des Getriebes (2) mit Hilfe eines Steuergerätes (3) in zwei unterschiedlichen Betriebsarten realisierbar sind, nämlich das Getriebe (2) in einer ersten Betriebsart im Automatik-Modus betreibbar ist und die Schaltungen im wesentlichen von ermittelten Fahrgrößen und mit Hilfe des Steuergerätes (3) automatisch realisierbar sind, wobei aber im Automatik-Modus das jeweilige Automatik-Programm (D, S, E) und/oder der jeweils höchste einzustellende Gang bestimmbar bzw. auswählbar ist, und wobei das Getriebe (2) in einer zweiten Betriebsart im automatisierten Hand-Schalt-Modus betreibbar ist und die Schaltungen mit Hilfe des Steuergerätes (3) und einer vom Fahrer manuell betreibbaren Betätigungsvorrichtung (12) realisierbar sind.

7. Vorrichtung nach Anspruch 6, **dadurch gekennzeichnet, dass** ein Schalt-Wählhebel (14) vorgesehen ist und der Schalt-Wählhebel (14) innerhalb einer ersten Schaltgasse (15) in verschiedene Positionen (P, R, N, D, S, E, 3, 2, 1) bewegbar ist.

8. Vorrichtung nach einem der Ansprüche 6 oder 7, **dadurch gekennzeichnet, dass** die Betätigungsvorrichtung (12) im Bereich des Lenkrades (11) angeordnet ist.

9. Vorrichtung nach einem der Ansprüche 6 bis 8, **dadurch gekennzeichnet, dass** die Betätigungsvorrichtung (12) einen ersten Schalter (12a) zum manuellen Heraufschalten der Gänge und einen zweiten Schalter (12b) zum manuellen Herunterschalten der Gänge aufweist.

10. Vorrichtung nach einem der Ansprüche 6 bis 9, **dadurch gekennzeichnet, dass** die Betätigungsvorrichtung (12) zur Durchführung der manuellen Schaltungen einen Wippenschalter aufweist.

11. Vorrichtung nach einem der Ansprüche 6 bis 10, **dadurch gekennzeichnet, dass** die Betätigungsvorrichtung (12) einen weiteren zusätzlichen Schalter (12a; 12b) zur Realisierung der Umschaltung vom Automatik-Modus zum Hand-Schalt-Modus (und umgekehrt) aufweist.

## Claims

1. Method for controlling the gearshifts of an automatic transmission or of an automated transmission (2) of a motor vehicle, wherein the gearshifts of the transmission (2) are realized in two different operating modes by means of a control unit (3), specifically in a first operating mode the transmission (2) is operated in an automatic mode with the gearshifts being realized substantially automatically from determined driving variables and by means of the control unit (3), wherein in the automatic mode, however, the respective automatic driving programme and/or the respective highest settable gear (D, S, E, 3, 2, 1) can be determined and/or selected by means of a selector lever (14) which is provided, and wherein in a second operating mode the transmission (2) is operated in an automated manual gearshift mode with the gearshifts being realized by means of the control unit (3) and an actuating device (12) which is operated manually by the driver, **characterized in that** the actuating device (12) and/or the controller is designed and/or configured in terms of control such that, while the transmission is being operated in the automatic mode, the respective highest settable gear can be selected by means of the actuating device (12), and **in that** the limitation of the highest settable gear to one of the lower gears is overridden under certain conditions, specifically when the actuating device (12) is actuated for a certain duration.

2. Method according to Claim 1, **characterized in that** in the automatic mode, a plurality of different automatic driving programmes can be realized, specifically at least one sport driving programme (S) and one economy driving programme (E).

3. Method according to one of the preceding claims, **characterized in that** the transmission is embodied as a 6-speed or 5-speed transmission, and the respective highest settable gear in the automatic mode is set with a limitation to one of the lower gears.

4. Method according to one of the preceding claims, **characterized in that** the transmission (2) is embodied as a 6-speed or 5-speed transmission, and if the respective highest settable gear in the automatic mode has been set with a limitation to one of the lower gears, said highest settable gear is thereafter reset to one of the upper gears by means of the actuating device (12).

5. Method according to one of the preceding claims, **characterized in that** the limitation of the highest settable gear to one of the lower gears is overridden under certain conditions, specifically when the vehicle has reached a certain minimum speed, or when the limitation to a lower gear has been active for a certain maximum time, or the driver is driving with a certain specific driving behaviour.

6. Device for controlling the gearshifts of an automatic transmission or of an automated transmission (2) of a motor vehicle, operating as per the method according to one of Claims 1 to 5, wherein the gearshifts of the transmission (2) can be realized in two different operating modes by means of a control unit (3), specifically in a first operating mode the transmission (2) can be operated in an automatic mode with the gearshifts being realizable substantially automatically from determined driving variables and by means of the control unit (3), wherein in the automatic mode, however, the respective automatic driving programme (D, S, E) and/or the respective highest settable gear can be determined and/or selected, and wherein in a second operating mode the transmission (2) can be operated in an automated manual gearshift mode with the gearshifts being realizable by means of the control unit (3) and an actuating device (12) which is operated manually by the driver.

7. Device according to Claim 6, **characterized in that** a selector lever (14) is provided and the selector lever (14) can move within a first shift gate (15) into different positions (P, R, N, D, S, E, 3, 2, 1) .

8. Device according to one of Claims 6 or 7, **characterized in that** the actuating device (12) is arranged in the region of the steering wheel (11).

9. Device according to one of Claims 6 to 8, **characterized in that** the actuating device (12) has a first switch (12a) for manually shifting up the gears and a second switch (12b) for manually shifting down the gears.

10. Device according to one of Claims 6 to 9, **characterized in that** the actuating device (12) has a rocker switch for carrying out manual gearshifts.

11. Device according to one of Claims 6 to 10, **characterized in that** the actuating device (12) has a further additional switch (12a; 12b) for switching from the automatic mode to the manual gearshift mode (and vice versa).

## Revendications

1. Procédé de commande des changements de rapport d'une boîte de vitesses automatique ou d'une transmission automatisée (2) d'un véhicule automobile, les changements de rapport de la transmission (2) étant réalisés dans deux modes de fonctionnement différents à l'aide d'un appareil de commande (3), à savoir que la transmission (2) est utilisée en mode automatique dans un premier mode de fonctionnement et les changements de rapport sont réalisés de manière automatique essentiellement par les grandeurs de conduite déterminées et à l'aide de l'appareil de commande (3), le programme de conduite automatique et/ou le rapport à chaque fois le plus haut à régler (D, S, E, 3, 2, 1) pouvant cependant, en mode automatique, être déterminé ou sélectionné par le biais d'un levier de sélection de rapport (14) prévu à cet effet, et la transmission (2) étant utilisée en mode de changement de rapport manuel automatisé dans un deuxième mode de fonctionnement et les changements de rapport sont réalisés à l'aide de l'appareil de commande (3) et d'un dispositif d'actionnement (12) pouvant être actionné manuellement par le conducteur, **caractérisé en ce que** le dispositif d'actionnement (12) et/ou la commande est configuré et/ou exécuté du point de vue de la technique de commande de telle sorte que - pendant que la transmission est utilisée en mode automatique - le rapport à chaque fois le plus haut réglable peut être sélectionné à l'aide du dispositif d'actionnement (12) et que la limitation à l'un des rapports inférieurs en tant que rapport le plus haut à régler est supprimée sous certaines conditions, à savoir lorsque le dispositif d'actionnement (12) est actionné pendant une durée donnée.

2. Procédé selon la revendication 1, **caractérisé en ce que** différents programmes de conduite sont réalisés en mode automatique, à savoir qu'il est possible de réaliser au moins un programme de conduite sportive (S) et un programme de conduite économique (E).

3. Procédé selon l'une des revendications précédentes, **caractérisé en ce que** la transmission est réalisée sous la forme d'une transmission à 5 rapports ou à 6 rapports et le rapport le plus élevé pouvant être à chaque fois réglé en mode automatique est réglé avec une limitation à l'un des rapports inférieurs.

4. Procédé selon l'une des revendications précédentes, **caractérisé en ce que** la transmission (2) est réalisée sous la forme d'une transmission à 5 rapports ou à 6 rapports et le rapport le plus élevé pouvant être à chaque fois réglé en mode automatique, lorsque celui-ci a été réglé avec une limitation à l'un des rapports inférieurs, est de nouveau rétabli à l'un des rapports supérieurs à l'aide du dispositif d'actionnement (12).

5. Procédé selon l'une des revendications précédentes, **caractérisé en ce que** la limitation à l'un des rapports inférieurs en tant que rapport le plus haut pouvant être réglé est supprimée sous certaines conditions, à savoir lorsque le véhicule a atteint une vitesse minimale donnée ou lorsque la limitation à un rapport inférieur a été réglée sur une durée maximale donnée ou encore en présence d'un mode de conduite spécifique donné du conducteur.

6. Dispositif de commande des changements de rapport d'une boîte de vitesses automatique ou d'une transmission automatisée (2) d'un véhicule automobile, fonctionnant d'après le procédé selon l'une des revendications 1 à 5, les changements de rapport de la transmission (2) pouvant être réalisés dans deux modes de fonctionnement différents à l'aide d'un appareil de commande (3), à savoir que la transmission (2) peut être utilisée en mode automatique dans un premier mode de fonctionnement et les changements de rapport peuvent être réalisés de manière automatique essentiellement par les grandeurs de conduite déterminées et à l'aide de l'appareil de commande (3), le programme automatique (D, S, E) et/ou le rapport à chaque fois le plus haut à régler pouvant cependant, en mode automatique, être déterminé ou sélectionné, et la transmission (2) pouvant être utilisée en mode de changement de rapport manuel automatisé dans un deuxième mode de fonctionnement et les changements de rapport pouvant être réalisés à l'aide de l'appareil de commande (3) et d'un dispositif d'actionnement (12) pouvant être actionné manuellement par le conducteur.

7. Dispositif selon la revendication 6, **caractérisé en ce qu'**il est prévu un levier de sélection de rapport (14) et le levier de sélection de rapport (14) peut être déplacé dans différentes positions (P, R, N, D, S, E, 3, 2, 1) dans une première voie de changement de rapport (15).

8. Dispositif selon l'une des revendications 6 ou 7, **caractérisé en ce que** le dispositif d'actionnement (12) est disposé dans la zone du volant (11).

9. Dispositif selon l'une des revendications 6 à 8, **caractérisé en ce que** le dispositif d'actionnement (12) présente un premier commutateur (12a) pour passer manuellement les rapports supérieurs et un deuxième commutateur (12b) pour passer manuellement les rapports inférieurs.

10. Dispositif selon l'une des revendications 6 à 9, **caractérisé en ce que** le dispositif d'actionnement (12) présente un interrupteur à bascule pour effectuer les changements de rapport manuels.

11. Dispositif selon l'une des revendications 6 à 10, **caractérisé en ce que** le dispositif d'actionnement (12) présente un autre commutateur (12a ; 12b) supplémentaire pour réaliser le basculement du mode automatique au mode de changement de rapport manuel (et inversement).
